# EUROPÄISCHE PATENTSCHRIFT

(11) **EP 3 940 596 B1**
(45) Veröffentlichungstag und Bekanntmachung des Hinweises auf die Patenterteilung: **15.10.2025**
(21) Anmeldenummer: 20185973.3
(22) Anmeldetag: 15.07.2020
(51) Int. Cl.: G06N 3/092, G06N 3/0455, G06N 3/047, G06N 3/0475

(54) **VERFAHREN ZUM KONFIGURIEREN EINES STEUERUNGSAGENTEN FÜR EIN TECHNISCHES SYSTEM SOWIE STEUEREINRICHTUNG**
METHOD FOR CONFIGURING A CONTROL AGENT FOR A TECHNICAL SYSTEM AND CONTROL DEVICE
PROCÉDÉ DE CONFIGURATION D'UN AGENT DE COMMANDE POUR UN SYSTÈME TECHNIQUE AINSI QUE DISPOSITIF DE COMMANDE

(43) Veröffentlichungstag der Anmeldung: 19.01.2022
(73) Patentinhaber: Siemens Aktiengesellschaft, 80333 München (DE)
(72) Erfinder: Runkler, Thomas, 81929 München (DE); Swazinna, Phillip, 85375 Neufahrn (DE); Udluft, Steffen, 82223 Eichenau (DE)
(74) Vertreter: Siemens Patent Attorneys

(56) Entgegenhaltungen:
- US-A1- 2020 142 420
- SCOTT FUJIMOTO ET AL: "Off-Policy Deep Reinforcement Learning without Exploration", 10 August 2019 (2019-08-10), arXiv.org, pages 1 - 23, XP055770245, Retrieved from the Internet <URL:https://arxiv.org/pdf/1812.02900.pdf> [retrieved on 20210129]

## Beschreibung

Zum Steuern von komplexen technischen Systemen, wie z.B. Gasturbinen, Windturbinen, Dampfturbinen, Motoren, Robotern, chemischen Reaktoren, Fräsmaschinen, Fertigungsanlagen, Kühlanlagen oder Heizungsanlagen, werden im zunehmenden Maße datengetriebene Verfahren des maschinellen Lernens eingesetzt. Hierbei werden insbesondere künstliche neuronale Netze mittels Verfahren des bestärkenden Lernens darauf trainiert, für einen jeweiligen Zustand des technischen Systems eine optimierte, zustandsspezifische Steuerkation zum Steuern des technischen Systems zu generieren. Ein solcher zum Steuern eines technischen Systems trainierter Steuerungsagent wird häufig auch als Policy oder kurz als Agent bezeichnet.

Für ein erfolgreiches Training eines Steuerungsagenten werden in der Regel große Mengen von Betriebsdaten des technischen Systems als Trainingsdaten benötigt. Die Trainingsdaten sollten dabei die Betriebszustände und andere Betriebsbedingungen des technischen Systems möglichst repräsentativ abdecken.

In vielen Fällen liegen derartige Trainingsdaten in Form von Datenbanken vor, in denen am technischen System aufgezeichnete Betriebsdaten gespeichert sind. Derartige gespeicherte Trainingsdaten werden häufig auch als Batch-Trainingsdaten oder Offline-Trainingsdaten bezeichnet. Erfahrungsgemäß hängt ein Trainingserfolg in der Regel davon ab, inwieweit die möglichen Betriebsbedingungen des technischen Systems durch die Batch-Trainingsdaten abgedeckt sind. Entsprechend ist damit zu rechnen, dass sich mit Batch-Trainingsdaten trainierte Steuerungsagenten in solchen Betriebszuständen ungünstig verhalten, für die nur wenige Batch-Trainingsdaten vorhanden waren.

Zur Verbesserung des Steuerverhaltens in von Trainingsdaten wenig abgedeckten Bereichen des Zustandsraums wird in den Publikationen "Off-Policy Deep Reinforcement Learning without Exploration" von S. Fujimoto, D. Meger und D. Precup in International Conference on Machine Learning 2019 (pp. 2052-2062) sowie "Stabilizing Off-Policy Q-Learning via Bootstrapping Error Reduction" von A. Kumar, J. Fu, G. Tucker und S. Levine in Advances in Neural Information Processing Systems, pp. 11761-11771, 2019, vorgeschlagen, die selektierbaren Steueraktionen durch geeignete Nebenbedingungen einzuschränken und ausgehend davon eine sogenannte Q-Funktion zu trainieren. Ein Training von Q-Funktionen ist jedoch häufig sehr datenaufwendig.

Einem Dokument US2020/0142420 A1 ist ein Computersystem entnehmbar, das so programmiert werden kann, dass es eine Fahrzeugaktion auf der Grundlage von Fahrzeugsensordaten bestimmt, die in ein tiefes neuronales Netzwerk eingegeben werden, wobei das tiefe neuronale Netzwerk mit einem inversen Reinforcement Learning System trainiert wurde, und das inverse Reinforcement Learning System einen abweichenden (variational) Auto-Encoder umfasst.

Es ist Aufgabe der vorliegenden Erfindung, ein Verfahren zum Konfigurieren eines Steuerungsagenten für ein technisches System sowie eine Steuereinrichtung zum Steuern des technischen Systems anzugeben, die ein effizienteres Training erlauben und/oder weniger Trainingsdaten benötigen.

Gelöst wird diese Aufgabe durch ein Verfahren mit den Merkmalen des Patentanspruchs 1, durch eine Steuereinrichtung mit den Merkmalen des Patentanspruchs 7, durch ein Computerprogrammprodukt mit den Merkmalen des Patentanspruchs 8 sowie durch ein computerlesbares Speichermedium mit den Merkmalen des Patentanspruchs 9.

Zum Konfigurieren eines Steuerungsagenten für ein technisches System werden vorgegebene Trainingsdaten eingelesen, wobei ein jeweiliger Trainingsdatensatz einen einen Zustand des technischen Systems spezifizierenden Zustandsdatensatz, einen eine Steueraktion spezifizierenden Aktionsdatensatz sowie einen aus einer Anwendung der Steueraktion resultierenden Performanzwert des technischen Systems umfasst. Anhand der Trainingsdaten wird ein datenbasiertes Dynamikmodell darauf trainiert, anhand eines Zustandsdatensatzes und eines Aktionsdatensatzes einen resultierenden Performanzwert zu reproduzieren. Ferner wird anhand der Trainingsdaten ein Aktionsbewertungsprozess darauf trainiert, anhand eines Zustandsdatensatzes und eines Aktionsdatensatzes nach einer Informationsreduktion den Aktionsdatensatz zu reproduzieren, wobei ein Reproduktionsfehler ermittelt wird. Des Weiteren werden dem trainierten Dynamikmodell, dem trainierten Aktionsbewertungsprozess sowie dem Steuerungsagenten Trainingsdaten zugeführt. Dabei werden vom trainierten Dynamikmodell ausgegebene Performanzwerte in eine vorgegebene Performanzfunktion eingespeist. Darüber hinaus werden in die Performanzfunktion vom trainierten Aktionsbewertungsprozess ausgegebene Reproduktionsfehler als performanzverringernde Einflussgrößen eingespeist. Weiterhin wird der Steuerungsagent darauf trainiert, anhand eines Zustandsdatensatzes einen die Performanzfunktion optimierenden Aktionsdatensatz auszugeben. Durch das Training wird der Steuerungsagent zum optimierten Steuern des technischen Systems konfiguriert.

Zum Ausführen des erfindungsgemäßen Verfahrens sind eine entsprechende Steuereinrichtung, ein Computerprogrammprodukt sowie ein computerlesbares, vorzugsweise nichtflüchtiges Speichermedium vorgesehen.

Das erfindungsgemäße Verfahren sowie die erfindungsgemäße Steuereinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass häufig erheblich weniger Trainingsdaten für ein erfolgreiches Training erforderlich sind, als beim Lernen einer Q-Funktion. Darüber hinaus ist das erfindungsgemäße Verfahren in vielen Fällen weniger anfällig gegenüber einer Akkumulation von Prognosefehlern als ein Training einer Q-Funktion. Weiterhin ist zu beobachten, dass der Reproduktionsfehler in von den Trainingsdaten gut abgedeckten Zustands- und Steueraktionsbereichen häufig kleiner ist als in schlecht abgedeckten Bereichen. Somit kann der Reproduktionsfehler in der Regel als Maß dafür aufgefasst werden, inwieweit eine jeweilige Steueraktion in einem jeweiligen Zustand durch die Trainingsdaten abgedeckt ist. Insofern der Reproduktionsfehler als performanzverringernde Einflussgröße beim Training des Steuerungsagenten verwendet wird, können negative Auswirkungen von schlecht durch Trainingsdaten abgedeckten Bereichen auf einen Trainingserfolg effektiv verringert werden.

Vorteilhafte Ausführungsformen und Weiterbildungen der Erfindung sind in den abhängigen Ansprüchen angegeben.

Der Aktionsbewertungsprozess wird mittels eines Autoencoders, insbesondere eines variationalen Autoencoders ausgeführt.

Gemäß einer vorteilhaften Ausführungsform der Erfindung kann der Aktionsbewertungsprozess mittels eines Autoencoders, insbesondere eines variationalen Autoencoders, und mittels generativer gegnerischer Netze ausgeführt werden. Durch Verwendung eines Autoencoders oder insbesondere eines variationalen Autoencoders kann eine informationsreduzierte und/oder weniger redundante Darstellung der eingespeisten Zustandsdatensätze und Aktionsdatensätze ermittelt werden. Darüber hinaus kann auf einfache Weise ein Maß dafür ermittelt werden, wie präzise sich insbesondere die Aktionsdatensätze aus den reduzierten Größen wieder rekonstruieren lassen. Dieses Maß kann vorteilhafterweise als Reproduktionsfehler verwendet werden.

Weiterhin können zum Training des Steuerungsagenten in den Steuerungsagenten jeweils ein Zustandsdatensatz und in das trainierte Dynamikmodell sowie in den trainierten Aktionsbewertungsprozess jeweils der Zustandsdatensatz und ein vom Steuerungsagenten ausgegebener Aktionsdatensatz eingespeist werden. Auf diese Weise kann der vom zu trainierenden Steuerungsagenten ausgegebene Aktionsdatensatz direkt durch den Aktionsbewertungsprozess bewertet werden.

Ein jeweiliger Trainingsdatensatz umfasst einen Folgezustandsdatensatz, der einen aus einer Anwendung der Steueraktion resultierenden Folgezustand des technischen Systems spezifiziert. Das Dynamikmodell wird dann anhand der Trainingsdaten darauf trainiert, anhand eines Zustandsdatensatzes und eines Aktionsdatensatzes einen resultierenden Folgezustandsdatensatz zu reproduzieren. Beim Training des Steuerungsagenten werden dann dem trainierten Dynamikmodell, dem trainierten Aktionsbewertungsprozess und/oder dem Steuerungsagenten jeweils vom trainierten Dynamikmodell ausgegebene Folgezustandsdatensätze zugeführt werden. Für die zugeführten Folgezustandsdatensätze ermittelte Performanzwerte und/oder Reproduktionsfehler werden dann in die Performanzfunktion eingespeist werden. Auf diese Weise kann ein Zustand und eine Steuerkation schrittweise in die Zukunft extrapoliert bzw. vorhergesagt werden und so eine mehrere Zeitschritte umfassende Steuertrajektorie ermittelt werden. Eine solche Extrapolation wird häufig auch als Roll-Out oder virtueller Roll-Out bezeichnet. Für die Steuertrajektorie kann dann mittels der Performanzfunktion eine über mehrere Zeitschritte kumulierte Performanz berechnet und vorzugsweise der Steueraktion am Anfang der Trajektorie zugeordnet werden. Eine solche kumulierte Performanz wird im Zusammenhang des bestärkenden Lernens häufig auch als Return bezeichnet. Zur Berechnung des Returns können die für zukünftige Zeitschritte ermittelten Performanzwerte diskontiert, d.h. mit für jeden Zeitschritt kleiner werdenden Gewichten versehen werden.

Zum Training des Steuerungsagenten kann vorzugweise ein gradientenbasiertes Optimierungsverfahren, ein stochastisches Optimierungsverfahren, eine Partikelschwarmoptimierung und/oder ein genetisches Optimierungsverfahren verwendet werden. Für die genannten Verfahren steht eine Vielzahl effizienter Implementierungen zu Verfügung.

Ein Ausführungsbeispiel der Erfindung wird nachfolgend anhand der Zeichnungen näher erläutert. Dabei veranschaulichen jeweils in schematischer Darstellung:
- Figur 1: eine erfindungsgemäße Steuereinrichtung beim Steuern eines technischen Systems;
- Figur 2: ein Training eines datenbasierten Dynamikmodells für das technische System;
- Figur 3: ein Training eines variationalen Autoencoders und
- Figur 4: ein Training eines Steuerungsagenten der Steuereinrichtung.

Insofern in verschiedenen Figuren gleiche oder korrespondierende Bezugszeichen verwendet werden, bezeichnen diese Bezugszeichen die gleichen oder korrespondierende Entitäten, die insbesondere wie in Zusammenhang mit der betreffenden Figur beschrieben, implementiert oder ausgestaltet sein können.

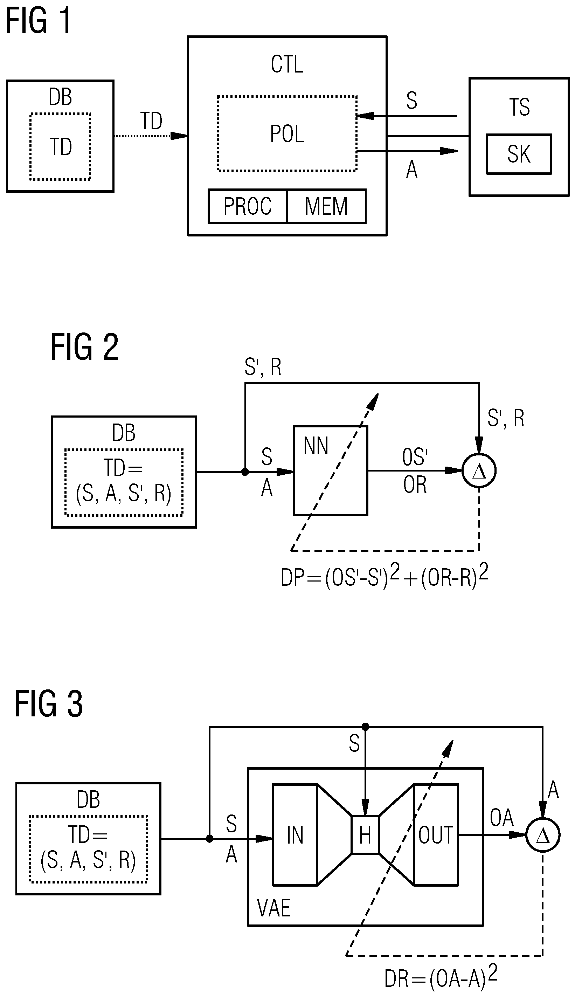

Figur 1 veranschaulicht eine erfindungsgemäße Steuereinrichtung CTL beim Steuern eines technischen Systems TS, z. B. einer Gasturbine, einer Windturbine, einer Dampfturbine, eines chemischen Reaktors, einer Fräsmaschine, einer Fertigungsanlage, einer Fabrik, eines Roboters, eines Kraftfahrzeugs, eines Motors, einer Kühlanlage, einer Heizungsanlage, einer Energieanlage oder einer anderen Maschine, eines anderen Geräts oder einer anderen Anlage. Insbesondere kann auch eine Komponente oder ein Teilsystem eines zusammengesetzten technischen Systems als technisches System TS aufgefasst werden. Das technische System TS verfügt über eine Sensorik SK zum vorzugsweise fortlaufenden Erfassen und/oder Messen von Systemzuständen oder Teilsystemzuständen des technischen Systems TS. Für das vorliegende Ausführungsbeispiel sei angenommen, dass als technisches System TS eine Gasturbine gesteuert wird.

Die Steuereinrichtung CTL ist in Figur 1 extern zum technischen System TS dargestellt und mit diesem gekoppelt. Alternativ kann die Steuereinrichtung CTL auch ganz oder teilweise in das technische System TS integriert sein.

Die Steuereinrichtung CTL verfügt über einen oder mehrere Prozessoren PROC zum Ausführen von Verfahrensschritten der Steuereinrichtung CTL sowie über einen oder mehrere mit dem Prozessor PROC gekoppelte Speicher MEM zum Speichern der von der Steuereinrichtung CTL zu verarbeitenden Daten.

Weiterhin weist die Steuereinrichtung CTL einen lernbasierten Steuerungsagenten POL auf, der durch Verfahren des bestärkenden Lernens trainierbar ist. Ein solcher Steuerungsagent wird häufig auch als Policy oder kurz Agent bezeichnet. Im vorliegenden Ausführungsbeispiel ist der Steuerungsagent POL als künstliches neuronales Netz implementiert.

Der Steuerungsagent POL und damit die Steuereinrichtung CTL werden vorab anhand von vorgegebenen Trainingsdaten datengetrieben trainiert und so zum optimierten Steuern des technischen Systems TS konfiguriert. Die Trainingsdaten zum Training des Steuerungsagenten POL werden einer Datenbank DB entnommen, in der die Trainingsdaten in Form einer Vielzahl von Trainingsdatensätzen TD gespeichert sind. Die gespeicherten Trainingsdatensätze TD wurden vorab am technischen System TS oder einem ähnlichen technischen System aufgezeichnet und/oder simulativ oder datengetrieben generiert. Auf der Grundlage dieser Offline-Trainingsdaten wird der Steuerungsagent POL erfindungsgemäß darauf trainiert, zu einem jeweils vorgegebenen Zustand des technischen Systems TS eine performanzoptimierende Steueraktion zu ermitteln. Der Ablauf dieses Trainings wird unten näher erläutert.

Nach abgeschlossenem Training wird der trainierte Steuerungsagent POL zum optimierten Steuern des technischen Systems TS eingesetzt. Zu diesem Zweck werden Zustandsdatensätze S des technischen Systems TS zur Steuereinrichtung CTL übermittelt. Die Zustandsdatensätze S spezifizieren jeweils einen Zustand, insbesondere einen Betriebszustand des technischen Systems TS und werden vorzugsweise jeweils durch einen numerischen Zustandsvektor dargestellt. Die Zustandsdatensätze S können Messdaten, Sensordaten, Umgebungsdaten oder andere im Betrieb des technischen Systems TS anfallende oder den Betrieb beeinflussende Daten umfassen. Beispielsweise Daten über Temperatur, Druck, Einstellungen, Aktorstellungen, Ventilpositionen, Emissionen, Auslastung, Ressourcenverbrauch und/oder Leistung des technischen Systems TS oder seiner Komponenten. Bei einer Produktionsanlage können die Zustandsdatensätze auch eine Produktqualität oder eine andere Produkteigenschaft betreffen. Die Zustandsdatensätze S werden zumindest teilweise durch die Sensorik SK des technischen Systems TS gemessen.

Die zur Steuereinrichtung CTL übermittelten Zustandsdatensätze S werden dem trainierten Steuerungsagenten POL als Eingabedaten zugeführt. Anhand eines jeweils zugeführten Zustandsdatensatzes S generiert der trainierte Steuerungsagent POL eine performanzoptimierende Steueraktion in Form eines jeweiligen Aktionsdatensatzes A. Ein jeweiliger Aktionsdatensatz A spezifiziert hierbei eine am technischen System TS vornehmbare Steueraktion oder ein entsprechendes Steuersignal. Die generierten Aktionsdatensätze A werden vom Steuerungsagenten POL bzw. von der Steuereinrichtung CTL zum technischen System TS übermittelt. Durch die übermittelten Aktionsdatensätze A wird das technische System TS in optimierter Weise gesteuert, indem die durch die Aktionsdatensätze A spezifizierten Steueraktionen durch das technische System TS ausgeführt werden.

Figur 2 veranschaulicht ein Training eines datenbasierten Dynamikmodells NN für das technische System TS. Das Dynamikmodell NN ist datengetrieben trainierbar und soll einen Zustandsübergang bei Anwendung einer Steueraktion auf einen vorgegebenen Zustand des technischen Systems TS modellieren. Ein solches Dynamikmodell wird häufig auch als Transitionsmodell oder Systemmodell bezeichnet. Das Dynamikmodell NN kann in der Steuereinrichtung CTL oder ganz oder teilweise extern dazu implementiert sein. Im vorliegenden Ausführungsbeispiel ist das Dynamikmodell NN als künstliches neuronales Netz implementiert.

Das Dynamikmodell NN soll anhand der in der Datenbank DB enthaltenen Trainingsdatensätze TD darauf trainiert werden, anhand eines jeweiligen Zustands und einer jeweiligen Steueraktion einen aus Anwendung der Steueraktion resultierenden Folgezustand des technischen Systems TS sowie einen daraus resultierenden Performanzwert möglichst genau vorherzusagen.

Das Training des Dynamikmodells NN erfolgt anhand der in der Datenbank DB gespeicherten Trainingsdatensätze TD. Ein jeweiliger Trainingsdatensatz TD umfasst hierbei einen Zustandsdatensatz S, einen Aktionsdatensatz A, einen Folgezustandsdatensatz S' sowie einen Performanzwert R. Wie oben bereits erwähnt, spezifizieren die Zustandsdatensätze S jeweils einen Zustand des technischen Systems TS und die Aktionsdatensätze A jeweils eine am technischen System TS vornehmbare Steueraktion. Entsprechend wird durch einen jeweiligen Folgezustandsdatensatz S' ein aus Anwendung der jeweiligen Steueraktion auf den jeweiligen Zustand resultierender Folgestand des technischen Systems TS spezifiziert. Der jeweils zugehörige Performanzwert R quantifiziert schließlich eine jeweilige Performanz einer Ausführung der jeweiligen Steueraktion im jeweiligen Zustand. Der Performanzwert R kann hierbei insbesondere eine aktuell resultierende Leistung, einen aktuell resultierenden Emissionswert, einen aktuell resultierenden Ressourcenverbrauch, eine aktuell resultierende Produktqualität und/oder andere aus einer Vornahme der aktuellen Steueraktion resultierende Betriebsparameter betreffen. Ein solcher Performanzwert wird im Zusammenhang des maschinellen Lernens auch mit den Begriffen Belohnung, Reward oder - komplementär dazu - Kosten oder Loss bezeichnet.

Zum Training des Dynamikmodells NN werden dem Dynamikmodell NN Zustandsdatensätze S sowie Aktionsdatensätze A als Eingabedaten zugeführt. Das Dynamikmodell NN soll so trainiert werden, dass dessen Ausgabedaten einen jeweils resultierenden Folgezustand sowie einen jeweils resultierenden Performanzwert möglichst genau reproduzieren. Das Training erfolgt vorzugsweise mittels eines Verfahrens des überwachten maschinellen Lernens.

Unter einem Training sei hierbei allgemein eine Optimierung einer Abbildung von Eingabedaten, hier S und A eines Maschinenlernmodells, hier NN, auf dessen Ausgabedaten verstanden. Diese Abbildung wird nach vorgegebenen, gelernten und/oder zu lernenden Kriterien während einer Trainingsphase optimiert. Als Kriterien können insbesondere bei Steuermodellen ein Erfolg einer Steueraktion oder bei Prädiktionsmodellen ein Prädiktionsfehler herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar. Unter einem Optimieren sei dabei stets auch eine Annäherung an ein Optimum verstanden.

Trainieren lassen sich insbesondere künstliche neuronale Netze, rekurrente neuronale Netze, faltende neuronale Netze, Perzeptrone, bayessche neuronale Netze, Autoencoder, variationale Autoencoder, Deep-Learning-Architekturen, Support-Vektor-Maschinen, datengetriebene Regressionsmodelle, k-nächste-Nachbarn-Klassifikatoren, physikalische Modelle oder Entscheidungsbäume.

Im Fall des Dynamikmodells NN werden diesem - wie oben schon erwähnt - Zustandsdatensätze S sowie Aktionsdatensätze A aus den Trainingsdaten als Eingabedaten zugeführt. Zu einem jeweiligen Eingabedatensatz (S, A) werden durch das Dynamikmodell NN ein Ausgabedatensatz OS' als Folgezustandsdatensatz sowie ein Ausgabedatensatz OR als Performanzwert ausgegeben. Durch das Training des Dynamikmodells NN wird angestrebt, dass die Ausgabedatensätze OS' mit den tatsächlichen Folgezustandsdatensätzen S' sowie die Ausgabedatensätze OR mit den tatsächlichen Performanzwerten R möglichst gut übereinstimmen. Zu diesem Zweck wird eine Abweichung DP zwischen den Ausgabedatensätzen (OS', OR) und den korrespondierenden in den Trainingsdaten enthaltenen Datensätzen (S', R) ermittelt. Die Abweichung DP repräsentiert hierbei einen Prädiktionsfehler des Dynamikmodells NN. Die Abweichung DP kann beispielsweise durch Berechnung eines euklidischen Abstands zwischen den jeweils darstellenden Vektoren ermittelt werden, z. B. gemäß DP = (OS'- S')² + (OR-R)².

Die Abweichung DP wird, wie in Figur 2 durch einen strichlierten Pfeil angedeutet, zum Dynamikmodell NN zurückgeführt. Anhand der zurückgeführten Abweichung DP wird das Dynamikmodell NN darauf trainiert, diese Abweichung DP und damit den Prädiktionsfehler zu minimieren. Zur Minimierung der Abweichung DP ist eine Vielzahl von effizienten Optimierungsverfahren verfügbar, z. B. gradientenbasierte Optimierungsverfahren, stochastische Gradientenabstiegsverfahren, Partikelschwarmoptimierungen und/oder genetische Optimierungsverfahren. Durch die Minimierung der Abweichung DP wird das Dynamikmodell NN darauf trainiert, zu einem vorgegebenen Zustand und einer vorgegebenen Steueraktion einen resultierenden Folgezustand sowie einen resultierenden Performanzwert möglichst gut vorherzusagen.

Figur 3 veranschaulicht ein Training eines variationalen Autoencoders VAE, der erfindungsgemäß als datengetriebener Aktionsbewertungsprozess fungiert. Der variationale Autoencoder VAE kann in der Steuereinrichtung CTL oder ganz oder teilweise extern dazu implementiert sein. Der variationale Autoencoder VAE dient dazu, eine jeweilige zustandsspezifische Steueraktion hinsichtlich ihrer Reproduzierbarkeit zu bewerten. Wie unten näher erläutert wird, erweist sich diese Reproduzierbarkeit als ein Maß für eine Ähnlichkeit einer jeweiligen zustandsspezifischen Steueraktion zu den in den Trainingsdaten vorliegenden Steueraktionen bzw. als Maß für eine Wahrscheinlichkeit in den Trainingsdaten vorzukommen.

Der variationale Autoencoder VAE ist im vorliegenden Ausführungsbeispiel als bayessches neuronales Netz implementiert und umfasst eine Eingabeschicht IN, eine verdeckte Schicht H sowie eine Ausgabeschicht OUT. Neben der verdeckten Schicht H kann der variationale Autoencoder VAE weitere verdeckte Schichten aufweisen. Kennzeichnend für einen Autoencoder ist, dass die verdeckte Schicht H signifikant kleiner ist, d. h. weniger Neuronen aufweist als die Eingabeschicht IN oder die Ausgabeschicht OUT.

Der variationale Autoencoder VAE soll anhand von aus der Datenbank DB eingelesenen Trainingsdaten darauf trainiert werden, anhand von eingespeisten Zustandsdatensätzen S und Aktionsdatensätzen A - nach einer durch die kleinere verdeckte Schicht H bedingten Informationsreduktion - die eingespeisten Aktionsdatensätze A möglichst genau zu reproduzieren. Dabei soll auch ein Reproduktionsfehler DR ermittelt werden.

Zu diesem Zweck werden Zustandsdatensätze S und Aktionsdatensätze A aus den Trainingsdaten als Eingabedaten in die Eingabeschicht IN eingespeist und durch die Schichten IN, H und OUT verarbeitet. Die verarbeiteten Daten werden schließlich von der Ausgabeschicht OUT als Ausgabedaten OA ausgegeben, die die eingespeisten Aktionsdatensätze A gemäß Trainingsziel möglichst genau reproduzieren sollen. Vorzugsweise werden Zustandsdatensätze S auch der verdeckten Schicht H zugeführt.

Insofern die Eingabedaten, hier S und A, gewissermaßen durch die kleinere verdeckte Schicht H hindurch müssen und aus der dort vorliegenden, geringeren oder reduzierten Datenmenge gemäß Trainingsziel wieder weitgehend rekonstruierbar sein sollen, erhält man in der verdeckten Schicht H eine datenreduzierte Repräsentation der Eingabedaten. Der variationale Autoencoder VAE lernt auf diese Weise eine effiziente Codierung bzw. Komprimierung der Eingabedaten. Indem auch Zustandsdatensätze S direkt in die verdeckte Schicht H eingespeist werden, kann erreicht werden, dass speziell die Aktionsdatensätze A in der verdeckten Schicht H effektiver codiert bzw. reduziert oder repräsentiert werden.

In der verdeckten Schicht H wird durch das Training ein sogenannter latenter Parameterraum oder eine latente Repräsentation insbesondere der Aktionsdatensätze A bzw. der hierdurch spezifizierten Steueraktionen realisiert. Die in der verdeckten Schicht H vorliegenden Daten korrespondieren zu einer abstrakten und informationsreduzierten Darstellung der in den Trainingsdaten enthaltenen zustandsspezifischen Steueraktionen.

Zum Erreichen des obigen Trainingsziels wird ein Optimierungsverfahren ausgeführt, das Verarbeitungsparameter des variationalen Autoencoders VAE derart einstellt, dass der Reproduktionsfehler DR minimiert wird. Als Reproduktionsfehler bzw. Reproduktionsunsicherheit DR kann hierbei insbesondere ein Abstand zwischen den Ausgabedaten OA und den eingespeisten Aktionsdatensätzen A ermittelt werden, gemäß DR = (OA - A)².

Zum Trainieren des variationalen Autoencoders VAE bzw. zum Optimieren seiner Verarbeitungsparameter werden die berechneten Abstände DR - wie in Figur 3 durch einen strichlierten Pfeil angedeutet - zum variationalen Autoencoder VAE zurückgeführt. Zur konkreten Durchführung des Trainings kann auf eine Vielzahl von effizienten Standardverfahren zurückgegriffen werden.

Nach einem erfolgreichen Training kann mittels des trainierten variationalen Autoencoders VAE ein beliebiges Paar aus einem jeweiligen Zustandsdatensatz S und einem jeweiligen Aktionsdatensatz A dahingehend bewertet werden, wie gut sich der jeweilige Aktionsdatensatz A aus der informationsreduzierten Darstellung in der verdeckten Schicht H rekonstruieren lässt. Es ist zu erwarten, dass häufig in den Trainingsdaten vorkommende Zustands-Steueraktions-Paare einen geringeren Reproduktionsfehler DR aufweisen als selten in den Trainingsdaten vorkommende Zustands-Steueraktions-Paare. Der Reproduktionsfehler DR des trainierten variationalen Autoencoders VAE kann also als Maß dafür verwendet werden, wie gut ein jeweiliges Zustands-Steueraktions-Paar durch die Trainingsdaten abgedeckt ist, bzw. wie häufig oder wie wahrscheinlich es dort vorkommt.

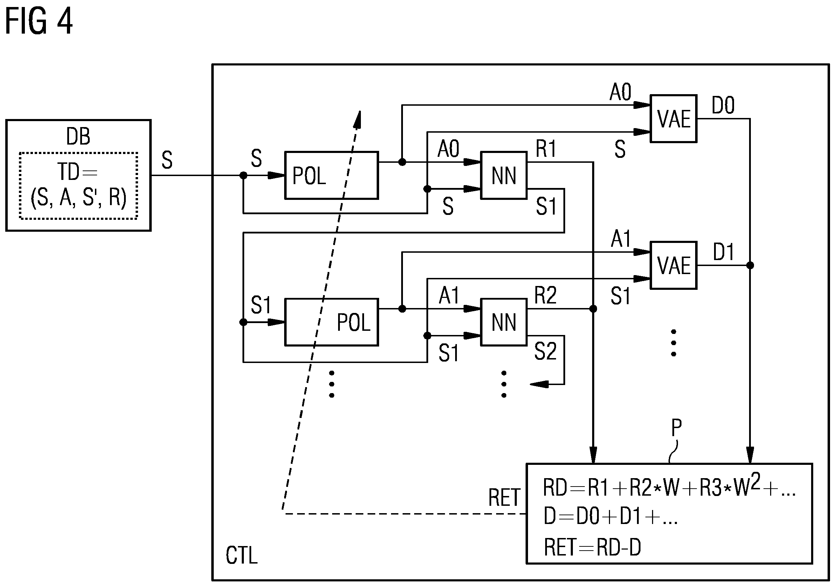

Figur 4 veranschaulicht ein Training des Steuerungsagenten POL der Steuereinrichtung CTL mittels des trainierten Dynamikmodells NN und des trainierten variationalen Autoencoders VAE. Zur Illustration aufeinanderfolgender Arbeitsschritte sind in Figur 4 jeweils mehrere Instanzen des Steuerungsagenten POL, des trainierten Dynamikmodells NN sowie des trainierten variationalen Autoencoders VAE dargestellt. Die verschiedenen Instanzen können insbesondere verschiedenen Aufrufen oder Auswertungen von Routinen entsprechen, mittels derer der Steuerungsagent POL, das trainierte Dynamikmodell NN bzw. der trainierte Aktionsbewertungsprozess VAE implementiert ist.

Wie oben bereits erwähnt, soll der Steuerungsagent POL darauf trainiert werden, zu einem jeweils vorgegebenen Zustandsdatensatz S eine performanzoptimierende Steueraktion in Form eines Aktionsdatensatzes A zu ermitteln. Das Training erfolgt anhand der in der Datenbank DB gespeicherten Trainingsdaten.

Zum Training werden Zustandsdatensätze S aus der Datenbank DB in großer Menge in den Steuerungsagenten POL als Eingabedaten eingespeist. Ein jeweiliger Zustandsdatensatz S spezifiziert hierbei jeweils einen gegebenen Zustand des technischen Systems TS. Anhand eines jeweiligen gegebenen Zustands werden durch das trainierte Dynamikmodell NN aus Anwendung von Steueraktionen resultierende Folgezustände des technischen Systems TS vorhergesagt. Darüber hinaus werden die vorhergesagten Folgezustände sowie der gegebene Zustand durch den trainierten variationalen Autoencoder VAE bewertet.

Zu diesen Zwecken werden die Zustandsdatensätze S auch dem trainierten Dynamikmodell NN und dem trainierten variationalen Autoencoder VAE als Eingabedaten zugeführt.

Aus einem jeweiligen Zustandsdatensatz S werden durch den Steuerungsagenten POL Ausgabedaten A0 abgeleitet und als Aktionsdatensatz ausgegeben. Der Aktionsdatensatz A0 wird zusammen mit dem jeweiligen Zustandsdatensatz S in das trainierte Dynamikmodell NN eingespeist, das daraus einen Folgezustand vorhersagt und einen diesen spezifizierenden Folgezustandsdatensatz S1 sowie einen zugehörigen Performanzwert R1 ausgibt.

Darüber hinaus wird der Aktionsdatensatz A0 zusammen mit dem jeweiligen Zustandsdatensatz S in den trainierten variationalen Autoencoder VAE eingespeist, der daraus einen Reproduktionsfehler D0 für den Aktionsdatensatz A0 ermittelt und ausgibt.

Der Folgezustandsdatensatz S1 wird wiederum in den Steuerungsagenten POL eingespeist, der daraus einen Aktionsdatensatz A1 für den Folgezustand ableitet. Der Aktionsdatensatz A1 wird zusammen mit dem jeweiligen Folgezustandsdatensatz S1 in das trainierte Dynamikmodell NN eingespeist, das daraus einen weiteren Folgezustand vorhersagt und einen diesen spezifizierenden Folgezustandsdatensatz S2 sowie einen zugehörigen Performanzwert R2 ausgibt. Darüber hinaus wird der Aktionsdatensatz A1 zusammen mit dem Folgezustandsdatensatz S1 in den trainierten variationalen Autoencoder VAE eingespeist, der daraus einen Reproduktionsfehler D1 für den Aktionsdatensatz A1 ermittelt und ausgibt.

Die vorstehenden Verfahrensschritte können iterativ wiederholt werden, wobei Performanzwerte und Reproduktionsfehler für weitere Folgezustände ermittelt werden. Die Iteration kann bei Vorliegen einer Abbruchbedingung beendet werden, z. B. bei Überschreiten einer vorgegebenen Anzahl von Iterationen. Auf diese Weise kann eine mehrere Zeitschritte umfassende, von Folgezustand zu Folgezustand weiterschreitende Steuertrajektorie mit zugehörigen Performanzwerten R1, R2, ... und Reproduktionsfehlern D0, D1,5 ... ermittelt werden.

Zur Ermittlung einer Gesamtperformanz einer jeweiligen Steuertrajektorie werden die ermittelten Performanzwerte R1, R2, ... sowie die ermittelten Reproduktionsfehler D0, D1, ... einer Performanzfunktion P zugeführt.

Die Performanzfunktion P ermittelt für eine jeweilige Steuertrajektorie eine erwartete Gesamtperformanz RET, d. h. eine über mehrere Zeitschritte kumulierte Performanz, die im Zusammenhang des bestärkenden Lernens häufig auch als Return bezeichnet wird. Die kumulierte Performanz RET wird dann der Steueraktion, hier A0, am Anfang der Trajektorie zugeordnet und bewertet so eine aktuelle Fähigkeit des Steuerungsagenten POL zu einem jeweiligen Zustandsdatensatz S eine günstige, performanzoptimierende Steueraktion, hier A0, zu ermitteln.

Die kumulierte Performanz RET wird durch die Performanzfunktion P vorzugsweise als über die zukünftigen Zeitschritte einer Steuertrajektorie diskontierte Performanz berechnet.

Zu diesem Zweck wird durch die Performanzfunktion P vorzugsweise eine gewichtete Summe RD der Performanzwerte R1, R2, ... berechnet, deren Gewichte mit jedem Zeitschritt in die Zukunft mit einem Diskontierungsfaktor W < 1 multipliziert werden. Auf diese Weise kann die gewichtete Summe gemäß RB = R1 + R2*W + R3*W² + ... berechnet werden. Für den Diskontierungsfaktor W kann z. B. ein Wert von 0,99 oder 0,9 eingesetzt werden.

Weiterhin werden die ermittelten Reproduktionsfehler D0, D1,... durch die Performanzfunktion P als performanzverringernde Einflussgrößen in die Berechnung der Gesamtperformanz RET einbezogen. Eine solche performanzverringernde Einflussgröße wird im Zusammenhang des bestärkenden Lernens häufig auch als Penalty bezeichnet. Im vorliegenden Ausführungsbeispiel werden die einzelnen Reproduktionsfehler D0, D1, ... zu einem Gesamtreproduktionsfehler D = D0 + D1 + ... aufsummiert. Die Gesamtperformanz RET wird damit berechnet gemäß RET = RD - D.

Zum Trainieren des Steuerungsagenten POL, d. h. zum Optimieren seiner Verarbeitungsparameter wird die Gesamtperformanz RET - wie in Figur 4 durch einen strichlierten Pfeil angedeutet - zum Steuerungsagenten POL zurückgeführt. Die Verarbeitungsparameter des Steuerungsagenten POL werden dabei so eingestellt bzw. konfiguriert, dass die Gesamtperformanz RET maximiert wird. Zur konkreten Durchführung des Trainings kann dabei auf eine Vielzahl von effizienten Standardverfahren, insbesondere des bestärkenden Lernens zurückgegriffen werden.

Indem ein hoher Gesamtreproduktionsfehler D die Gesamtperformanz RET einer Trajektorie verringert, wird ein nachteiliger Einfluss von Steueraktionen mit hohem Reproduktionsfehler auf das Training effektiv vermindert. Wie oben schon erwähnt, sind derartige Steueraktionen durch die Trainingsdaten wahrscheinlich weniger abgedeckt und würden einen Trainingserfolg wahrscheinlich negativ beeinflussen.

Es erweist sich, dass durch das erfindungsgemäße Verfahren ein Trainingserfolg des Steuerungsagenten POL, insbesondere im Fall eines Offline-Trainings in der Regel wesentlich verbessert werden kann. Gegenüber einem Training einer Q-Funktion werden zudem oft erheblich weniger Trainingsdaten benötigt.

Nach erfolgreichem Training des Steuerungsagenten POL kann dieser, wie im Zusammenhang mit Figur 1 beschrieben, zum optimierten Steuern des technischen Systems TS verwendet werden.

## Patentansprüche

1. Computerimplementiertes Verfahren zum Konfigurieren eines Steuerungsagenten (POL) für ein technisches System (TS), wobei
a) vorgegebene Trainingsdaten (TD) eingelesen werden, wobei ein jeweiliger Trainingsdatensatz einen Zustand des technischen Systems spezifizierenden Zustandsdatensatz (S), einen eine Steueraktion spezifizierenden Aktionsdatensatz (A) sowie einen aus einer Anwendung der Steueraktion resultierenden Performanzwert (R) des technischen Systems umfasst,
b) ein datenbasiertes Transitionsmodell (NN) anhand der Trainingsdaten (TD) darauf trainiert wird, anhand eines Zustandsdatensatzes (S) und eines Aktionsdatensatzes (A) einen resultierenden Performanzwert (R) zu reproduzieren,
c) ein Aktionsbewertungsprozess (VAE) anhand der Trainingsdaten (TD) darauf trainiert wird, anhand eines Zustandsdatensatzes (S) und eines Aktionsdatensatzes (A) nach einer Informationsreduktion den Aktionsdatensatz (A) zu reproduzieren, wobei ein Reproduktionsfehler (DR, D0, D1) ermittelt wird und der Aktionsbewertungsprozess (VAE) mittels eines Autoencoders, insbesondere eines variationalen Autoencoders, ausgeführt wird,
d) dem trainierten Transitionsmodell (NN), dem trainierten Aktionsbewertungsprozess (VAE) sowie dem Steuerungsagenten (POL) Trainingsdaten (TD) zugeführt werden, wobei
- vom trainierten Transitionsmodell (NN) ausgegebene Performanzwerte (R1, R2) in eine vorgegebene Performanzfunktion (P) eingespeist werden,
- vom trainierten Aktionsbewertungsprozess (VAE) ausgegebene Reproduktionsfehler (D0, D1) in die Performanzfunktion (P) als performanzverringernde Einflussgrößen eingespeist werden, und
- der Steuerungsagent (POL) darauf trainiert wird, anhand eines Zustandsdatensatzes (S) einen die Performanzfunktion (P) optimierenden Aktionsdatensatz (A) auszugeben,
e) der Steuerungsagent (POL) durch das Training zum optimierten Steuern des technischen Systems (TS) konfiguriert wird,
f) das technische System (TS) mittels des konfigurierten Steuerungsagenten (POL) in optimierter Weise gesteuert wird, indem Zustandsdatensätze (S) des technischen Systems (TS) mittels einer Sensorik des technischen Systems (TS) gemessen werden, die gemessenen Zustandsdatensätze (S) dem konfigurierten Steuerungsagenten (POL) als Eingabedaten zugeführt werden, der konfigurierte Steuerungsagent POL anhand eines jeweils zugeführten Zustandsdatensatzes S eine performanzoptimierende Steueraktion in Form eines jeweiligen Aktionsdatensatzes A generiert, und die performanzoptimierende Steueraktion vom technischen System TS ausgeführt werden;
**dadurch gekennzeichnet, dass**
- ein jeweiliger Trainingsdatensatz einen Folgezustandsdatensatz (S') umfasst, der einen aus einer Anwendung der Steueraktion resultierenden Folgezustand des technischen Systems (TS) spezifiziert,
- das Transitionsmodell (NN) anhand der Trainingsdaten darauf trainiert wird, anhand eines Zustandsdatensatzes (S) und eines Aktionsdatensatzes (A) einen resultierenden Folgezustandsdatensatz (S') zu reproduzieren;
- beim Training des Steuerungsagenten (POL) dem trainierten Transitionsmodell (NN), dem trainierten Aktionsbewertungsprozess (VAE) und/oder dem Steuerungsagenten (POL) jeweils vom trainierten Transitionsmodell (NN) ausgegebene Folgezustandsdatensätze (S1, S2) zugeführt werden, und
- für die zugeführten Folgezustandsdatensätze (S1, S2) ermittelte Performanzwerte (R2) und Reproduktionsfehler (D1) in die Performanzfunktion (P) eingespeist werden;
- durch die Performanzfunktion (P) gewichtete Summen oder gewichtete Differenzen von Performanzwerten (R1, R2) und Reproduktionsfehlern (D0, D1) gebildet werden, um eine Gesamtperformanz (RET) zu berechnen; und
wobei zum Trainieren des Steuerungsagenten (POL) die Gesamtperformanz (RET) an den Steuerungsagenten (POL) zurückgeführt wird, so dass Verarbeitungsparameter des Steuerungsagenten (POL) so konfiguriert werden, dass die Gesamtperformanz (RET) maximiert wird.

2. Verfahren nach Anspruch 1, **dadurch gekennzeichnet, dass** der Aktionsbewertungsprozess zusätzlich mittels generativer gegnerischer Netze ausgeführt wird.

3. Verfahren nach einem der vorhergehenden Ansprüche, **dadurch gekennzeichnet,**
**dass** zum Training des Steuerungsagenten (POL) in den Steuerungsagenten (POL) jeweils ein Zustandsdatensatz (S) und in das trainierte Transitionsmodell (NN) sowie in den trainierten Aktionsbewertungsprozess (VAE) jeweils der Zustandsdatensatz (S) und ein vom Steuerungsagenten (POL) ausgegebener Aktionsdatensatz (A0, A1) eingespeist werden.

4. Verfahren nach einem der vorhergehenden Ansprüche, **dadurch gekennzeichnet, dass**
zum Training des Steuerungsagenten (POL) ein gradientenbasiertes Optimierungsverfahren, ein stochastisches Optimierungsverfahren, eine Partikelschwarmoptimierung und/oder ein genetisches Optimierungsverfahren verwendet wird.

5. Verfahren nach einem der vorhergehenden Ansprüche, **dadurch gekennzeichnet,**
**dass** das Transitionsmodell (NN), der Steuerungsagent (POL) und/oder der Aktionsbewertungsprozess (VAE) ein künstliches neuronales Netz, ein rekurrentes neuronales Netz, ein faltendes neuronales Netz, ein mehrlagiges Perzeptron, ein bayessches neuronales Netz, einen Autoencoder, eine Deep-Learning-Architektur, eine Support-Vektor-Maschine, ein datengetriebenes trainierbares Regressionsmodell, einen k-nächste-Nachbarn-Klassifikator, ein physikalisches Modell und/oder einen Entscheidungsbaum umfasst.

6. Verfahren nach einem der vorhergehenden Ansprüche, **dadurch gekennzeichnet,**
**dass** das technische System (TS) eine Gasturbine, eine Windturbine, eine Dampfturbine, ein chemischer Reaktor, eine Fräsmaschine, eine Fertigungsanlage, eine Fabrik, ein Roboter, ein Motor, eine Kühlanlage, eine Heizungsanlage oder eine andere Maschine, ein anderes Gerät oder eine andere Anlage ist.

7. Steuereinrichtung (CTL) zum Steuern eines technischen Systems (TS), eingerichtet zum Ausführen eines Verfahrens nach einem der vorhergehenden Ansprüche.

8. Computerprogrammprodukt umfassend Befehle, die bei Ausführung durch einen Computer diesen veranlassen, das Verfahrens nach einem der Ansprüche 1 bis 6 auszuführen.

9. Computerlesbares Speichermedium mit einem Computerprogrammprodukt nach Anspruch 8.

## Claims

1. Computer-implemented method for configuring a control agent (POL) for a technical system (TS), wherein
a) predefined training data (TD) are read in, a respective training dataset comprising a state dataset (S) that specifies a state of the technical system, an action dataset (A) that specifies a control action and a performance value (R) of the technical system that results from an application of the control action,
b) a data-based transition model (NN) is trained on the basis of the training data (TD) to take a state dataset (S) and an action dataset (A) as a basis for reproducing a resulting performance value (R),
c) an action evaluation process (VAE) is trained on the basis of the training data (TD) to take a state dataset (S) and an action dataset (A), after a reduction of information, as a basis for reproducing the action dataset (A), with a reproduction error (DR, D0, D1) being ascertained, and the action evaluation process (VAE) being carried out by means of an autoencoder, in particular a variational autoencoder,
d) the trained transition model (NN), the trained action evaluation process (VAE) and the control agent (POL) are supplied with training data (TD), wherein
- performance values (R1, R2) output by the trained transition model (NN) are fed to a predefined performance function (P),
- reproduction errors (D0, D1) output by the trained action evaluation process (VAE) are fed to the performance function (P) as performance-diminishing influencing variables, and
- the control agent (POL) is trained to take a state dataset (S) as a basis for outputting an action dataset (A) that optimizes the performance function (P),
e) the control agent (POL) is configured by the training to control the technical system (TS) in an optimized manner,
f) the technical system (TS) is controlled in an optimized manner by means of the configured control agent (POL) by measuring state datasets (S) of the technical system (TS) by means of a sensor system of the technical system (TS), supplying the measured state datasets (S) to the configured control agent (POL) as input data, the configured control agent (POL) generating a performance-optimizing control action in the form of a respective action dataset (A) on the basis of a state dataset (S) supplied in each case, and the performance-optimizing control action being carried out by the technical system (TS);
**characterized in that**
- a respective training dataset comprises a subsequent state dataset (S') that specifies a subsequent state of the technical system (TS) that results from an application of the control action,
- the transition model (NN) is trained on the basis of the training data to take a state dataset (S) and an action dataset (A) as a basis for reproducing a resulting subsequent state dataset (S');
- the training of the control agent (POL) involves the trained transition model (NN), the trained action evaluation process (VAE) and/or the control agent (POL) each being supplied with subsequent state datasets (S1, S2) output by the trained transition model (NN), and
- performance values (R2) and reproduction errors (D1) ascertained for the supplied subsequent state datasets (S1, S2) are fed to the performance function (P);
- the performance function (P) forms weighted sums or weighted differences for performance values (R1, R2) and reproduction errors (D0, D1) in order to calculate an overall performance (RET); and
wherein training the control agent (POL) comprises feeding back the overall performance (RET) to the control agent (POL), such that processing parameters of the control agent (POL) are configured in such a way that the overall performance (RET) is maximized.

2. Method according to Claim 1, **characterized in that**
the action evaluation process is additionally carried out by means of generative adversarial networks.

3. Method according to one of the preceding claims,
**characterized**
**in that** training the control agent (POL) comprises feeding a respective state dataset (S) to the control agent (POL) and feeding the state dataset (S) and an action dataset (A0, A1) output by the control agent (POL) both to the trained transition model (NN) and to the trained action evaluation process (VAE).

4. Method according to one of the preceding claims,
**characterized in that**
a gradient-based optimization method, a stochastic optimization method, particle swarm optimization and/or a genetic optimization method is/are used to train the control agent (POL).

5. Method according to one of the preceding claims,
**characterized**
**in that** the transition model (NN), the control agent (POL) and/or the action evaluation process (VAE) comprise(s) an artificial neural network, a recurrent neural network, a convolutional neural network, a multilayer perceptron, a Bayesian neural network, an autoencoder, a deep learning architecture, a support vector machine, a data-driven trainable regression model, a k nearest neighbour classifier, a physical model and/or a decision tree.

6. Method according to one of the preceding claims,
**characterized**
**in that** the technical system (TS) is a gas turbine, a wind turbine, a steam turbine, a chemical reactor, a milling machine, a production plant, a factory, a robot, a motor, a cooling plant, a heating plant or a different machine, a different device or a different plant.

7. Control device (CTL) for controlling a technical system (TS), configured to carry out a method according to one of the preceding claims.

8. Computer program product comprising instructions that, when executed by a computer, cause said computer to carry out the method according to one of Claims 1 to 6.

9. Computer-readable storage medium containing a computer program product according to Claim 8.

## Revendications

1. Procédé mis en œuvre par ordinateur pour la configuration d'un agent de commande (POL) pour un système technique (TS),
dans lequel
a) des données d'entraînement (TD) prédéfinies sont mises en mémoire, dans lequel un ensemble de données d'entraînement respectif comporte un ensemble de données d'état (S) spécifiant l'état du système technique, un ensemble de données d'action (A) spécifiant une action de commande, ainsi qu'une valeur de performance (R) du système technique résultant d'une application de l'action de commande,
b) un modèle de transition (NN) basé sur les données est entraîné, à l'aide des données d'entraînement (TD), à reproduire une valeur de performance (R) résultante à l'aide d'un ensemble de données d'état (S) et d'un ensemble de données d'action (A),
c) un processus d'évaluation d'action (VAE) est entraîné, à l'aide des données d'entraînement (TD), à reproduire l'ensemble de données d'action (A) à l'aide d'un ensemble de données d'état (S) et d'un ensemble de données d'action (A) après une réduction d'informations, dans lequel une erreur de reproduction (DR, D0, D1) est déterminée et le processus d'évaluation d'action (VAE) est exécuté au moyen d'un autoencodeur, en particulier d'un autoencodeur variationnel,
d) des données d'entraînement (TD) sont introduites dans le modèle de transition (NN) entraîné, le processus d'évaluation d'action (VAE) entraîné, ainsi que l'agent de commande (POL),
dans lequel
- des valeurs de performance (R1, R2) émises par le modèle de transition (NN) entraîné sont injectées dans une fonction de performance (P) prédéfinie,
- des erreurs de reproduction (D0, D1) émises par le processus d'évaluation d'action (VAE) entraîné sont injectées dans la fonction de performance (P) en tant que grandeurs d'influence diminuant la performance, et
- l'agent de commande (POL) est entraîné à émettre, à l'aide d'un ensemble de données d'état (S), un ensemble de données d'action (A) optimisant la fonction de performance (P),
e) l'agent de commande (POL) est configuré, par le biais de l'entraînement, pour la commande optimisée du système technique (TS),
f) le système technique (TS) est commandé de manière optimisée, au moyen de l'agent de commande (POL) configuré, du fait que des ensembles de données d'état (S) du système technique (TS) sont mesurés au moyen d'un capteur du système technique (TS), les ensembles de données d'état (S) mesurés sont introduits dans l'agent de commande (POL) configuré en tant que données d'entrée, l'agent de commande POL configuré génère, à l'aide d'un ensemble de données d'état (S) introduit respectivement, une action de commande optimisant la performance sous la forme d'un ensemble de données d'action (A) respectif, et l'action de commande optimisant la performance est exécutée par le système technique (TS) ;
**caractérisé en ce que**
- un ensemble de données d'entraînement respectif comporte un ensemble de données d'état suivant (S'), lequel spécifie un état suivant du système technique (TS) résultant d'une application de l'action de commande,
- le modèle de transition (NN) est entraîné, à l'aide des données d'entraînement, à reproduire un ensemble de données d'état suivant (S') résultant à l'aide d'un ensemble de données d'état (S) et d'un ensemble de données d'action (A) ;
- lors de l'entraînement de l'agent de commande (POL), des ensembles de données d'état suivant (S1, S2) émis respectivement par le modèle de transition (NN) entraîné sont introduits dans le modèle de transition (NN) entraîné, le processus d'évaluation d'action (VAE) entraîné et/ou l'agent de commande (POL), et
- des valeurs de performance (R2) et des erreurs de reproduction (D1) déterminées pour les ensembles de données d'état suivant (S1, S2) introduits sont injectées dans la fonction de performance (P) ;
- des sommes pondérées ou des différences pondérées de valeurs de performance (R1, R2) et d'erreurs de reproduction (D0, D1) sont formées par le biais de la fonction de performance (P) afin de calculer une performance globale (RET) ; et
dans lequel, pour l'entraînement de l'agent de commande (POL), la performance globale (RET) est renvoyée vers l'agent de commande (POL), de sorte que des paramètres de traitement de l'agent de commande (POL) sont configurés de telle sorte que la performance globale (RET) soit maximisée.

2. Procédé selon la revendication 1, **caractérisé en ce que** le processus d'évaluation d'action est exécuté en outre au moyen de réseaux antagonistes génératifs.

3. Procédé selon l'une des revendications précédentes, **caractérisé en ce que**, pour l'entraînement de l'agent de commande (POL), un ensemble de données d'état (S) est respectivement injecté dans l'agent de commande (POL), et l'ensemble de données d'état (S) et un ensemble de données d'action (A0, A1) émis par l'agent de commande (POL) sont respectivement injectés dans le modèle de transition (NN) entraîné ainsi que dans le processus d'évaluation d'action (VAE) entraîné.

4. Procédé selon l'une des revendications précédentes, **caractérisé en ce que**, pour l'entraînement de l'agent de commande (POL), un procédé d'optimisation basé sur le gradient, un procédé d'optimisation stochastique, une optimisation par essaims particulaires et/ou un procédé d'optimisation génétique sont utilisés.

5. Procédé selon l'une des revendications précédentes, **caractérisé en ce que** le modèle de transition (NN), l'agent de commande (POL) et/ou le processus d'évaluation d'action (VAE) comportent un réseau neuronal artificiel, un réseau neuronal récurrent, un réseau neuronal convolutif, un perceptron multicouche, un réseau neuronal bayésien, un autoencodeur, une architecture d'apprentissage profond, une machine à vecteurs de support, un modèle de régression entraînable axé sur les données, un classificateur des k plus proches voisins, un modèle physique et/ou un arbre de décision.

6. Procédé selon l'une des revendications précédentes, **caractérisé en ce que** le système technique (TS) est une turbine à gaz, une éolienne, une turbine à vapeur, un réacteur chimique, une fraiseuse, une installation de fabrication, une usine, un robot, un moteur, une installation de refroidissement, une installation de chauffage ou une autre machine, un autre appareil ou une autre installation.

7. Dispositif de commande (CTL) pour la commande d'un système technique (TS), conçu pour l'exécution d'un procédé selon l'une des revendications précédentes.

8. Produit de programme informatique comportant des instructions qui, lors de leur exécution par un ordinateur, amènent celui-ci à exécuter le procédé selon l'une des revendications 1 à 6.

9. Support de stockage lisible par ordinateur avec un produit de programme informatique selon la revendication 8.
